# EUROPEAN PATENT APPLICATION

(11) **EP 2 135 917 A1**
(43) Date of publication of application: **23.12.2009**
(21) Application number: 09251588.1
(22) Date of filing: 18.06.2009
(51) Int. Cl.: C09K 11/08, C09K 11/59

(54) **Green phosphor, display device including the same, and associated methods**

(30) Priority: 18.06.2008 KR 20080057389
(71) Applicant: Samsung SDI Co., Ltd., Gyeonggi-do (KR)
(72) Inventor: Lee, Hyun-Deok, Suwon-si, Gyeonggi-do (KR); Byun, Jae-Dong, Seoul (KR); Ryou, Sun-Youn, Cheonan-si, Chungcheongnam-do (KR); Sun, Hwa Kwon, Suwon-si, Gyeonggi-do (KR); Kyu, Chan Park, Suwon-si, Gyeonggi-do (KR); Yong, Chan You, Suwon-si, Gyeonggi-do (KR); Yoon-Chang, Kim, Suwon-si, Gyeonggi-do (KR)
(74) Representative: Mounteney, Simon James

(57) **Abstract**

A green phosphor for a display device, a display device including the same, and associated methods, the green phosphor including Zn₂SiO₄:Mn coated with a B₂O₃ coating material, the B₂O₃ coating material being present in an amount of about 0.001 wt.% to about 3 wt.%, based on the total weight of Zn₂SiO₄:Mn.

## Description

### BACKGROUND

### 1. Technical Field

The invention relates to a green phosphor, a display device including the same, and associated methods.

### 2. Description of the Related Art

A plasma display panel (PDP) is a display device that forms an image by exciting a phosphor with, e.g., vacuum ultraviolet (VUV) rays generated by gas discharge in discharge cells. Since a PDP is capable of realizing a large, high-resolution image, it is drawing attention as a next-generation thin display device. A PDP may include address electrodes disposed in a first direction on a rear substrate and a dielectric layer covering the address electrode. Barrier ribs may be formed on the dielectric layer in, e.g., a stripe pattern, and red (R), green (G), and blue (B) phosphor layers may be positioned on the discharge cells between the barrier ribs. On a surface of a front substrate, display electrodes may be formed in a second direction crossing the address electrodes, wherein a pair of display electrodes includes transparent electrodes and bus electrodes. Dielectric and protection layers may be formed on the front substrate and cover the display electrodes. Discharge cells may be formed by the intersection of the address electrodes of the rear substrate and the display electrodes of the front substrate.

In order to realize uniform and stable discharge of a PDP, a surface potential of a phosphor layer should be high, and thus gaseous anions should collide with the phosphor layer at a high velocity. Therefore, the higher the surface potential of the phosphor layer, the larger the potential difference between the phosphor layer and anions, accomplishing stable emitting properties and plasma discharge. This phosphor layer may generally be prepared by mixing solid raw powdery materials and sintering the mixture at high temperature. The phosphor layer may have various surface potentials according to the composition and properties of the raw materials. In particular, a zinc silicate-based (Zn₂SiO₄:Mn) green phosphor may generally be used in a green phosphor layer. It has various color purity, luminance, lifespan, and decay time characteristics, depending on the concentration of an activator, e.g., Mn. The Zn₂SiO₄:Mn phosphor may be prepared by mixing the raw materials, ZnO, SiO₂, and MnCO₃. However, since it may include a final product having non-uniform composition, and an intermediate product, it may have a negative surface potential unlike red and blue phosphors. The negative surface potential of the phosphor layer may have an effect on the surface potential, and may cause a discharge voltage of the green cells to undesirably increase. The mechanism of increasing the discharge voltage may be described as follows: upon the reset discharge, a characteristic of driving an alternating current plasma display during the real discharge, that is, before the discharge voltage is applied to the address electrode terminal, is that a wall charge is accumulated. As the green phosphor layer having negative surface potential characteristics absorbs or counterbalances the wall charge of cations, the green cell generates a smaller discharge voltage between front and rear substrates than those of the red and blue cells. Accordingly, a green cell including a green phosphor layer with a negative surface potential may require a higher address voltage compared with the red and blue cells. There has been research on a green phosphor layer having a surface potential similar to the red and blue phosphor layers. However, when the green phosphor layer has a surface potential similar to the red and blue phosphor layers, it may also have undesirably decreased luminance and lifespan.

### SUMMARY

The invention is directed to a green phosphor, a display device including the same, and associated methods, which substantially overcome the problems due to the limitations and disadvantages of the related art.

It is therefore an object of the invention to provide a green phosphor layer having excellent luminance and a long lifespan.

Accordingly, the invention provides a green phosphor for a display device, including Zn₂SiO₄:Mn coated with a B₂O₃ coating material. The B₂O₃ coating material may be present in an amount of about 0.001 wt.% to about 3 wt.%, based on the total weight of Zn₂SiO₄:Mn.

The B₂O₃ coating material may be present in an amount of about 0.05 wt. % to about 2 wt.%, based on the total weight of Zn₂SiO₄:Mn.

The B₂O₃ coating material may be present in an amount of about 0.1 wt.% to about 1 wt.%, based on the total weight of Zn₂SiO₄:Mn.

The B₂O₃ coating material may be coated at a thickness of about 10 nm to about 100 nm.

At least one of the above and other features and advantages may also be realized by providing a display device, including a first substrate and a second substrate facing each other, a plurality of address electrodes disposed on the first substrate, a plurality of display electrodes disposed on a side of the second substrate in a direction crossing the address electrodes, and red, green, and blue phosphor layers disposed in a discharge space between the first substrate and the second substrate. The green phosphor layers may include a green phosphor of Zn₂SiO₄:Mn coated with a B₂O₃ coating material, the B₂O₃ coating material being present in an amount of about 0.001 wt.% to about 3 wt.%, based on the total weight of Zn₂SiO₄:Mn.

The B₂O₃ coating material may be present in an amount of about 0.05 wt. % to about 2 wt.%, based on the total weight of Zn₂SiO₄:Mn.

The B₂O₃ coating material may be present in an amount of about 0.1 wt. % to about 1 wt.%, based on the total weight of Zn₂SiO₄:Mn.

The B₂O₃ coating material may be coated at a thickness of about 10 nm to about 100 nm.

The invention also provides a method of fabricating a display device, including providing a first substrate and a second substrate facing each other and having a discharge space therebetween, forming a plurality of address electrodes on the first substrate, forming a plurality of display electrodes on a side of the second substrate in a direction crossing the address electrodes, and forming red, green, and blue phosphor layers in the discharge space between the first substrate and the second substrate. The green phosphor layers may include a green phosphor of Zn₂SiO₄:Mn coated with a B₂O₃ coating material, and the B₂O₃ coating material may be present in an amount of about 0.001 wt.% to about 3 wt.%, based on the total weight of Zn₂SiO₄:Mn.

The B₂O₃ coating material may be present in an amount of about 0.05 wt.% to about 2 wt.%, based on the total weight of Zn₂SiO₄:Mn.

The B₂O₃ coating material may be present in an amount of about 0.1 wt.% to about 1 wt.%, based on the total weight of Zn₂SiO₄:Mn.

Forming the green phosphor layers may include mixing Zn₂SiO₄:Mn with B₂O₃ to form a mixture, and heat treating the mixture at about 400 °C to about 500 °C.

Heat treating the mixture may be performed for a non-zero amount of time of up to about 1 hour.

The above and other features of the invention are set out in the appended claims.

### BRIEF DESCRIPTION OF THE DRAWINGS

Embodiments of the invention will be described by way of example and with reference to the attached drawings, in which:
FIG. 1 illustrates a partially-exploded perspective view of the structure of a PDP according to an embodiment;
FIG. 2 illustrates Table 1, showing preparation conditions, relative luminance, color coordinate, and lifespan for Examples 1 to 8, Comparative Examples 1 and 3, and Reference Example 1;
FIG. 3 illustrates Table 2, showing preparation conditions, relative luminance, color coordinate, and lifespan for Examples 9 to 16, Comparative Examples 2 and 3, and Reference Example 2; and
FIG. 4 illustrates Table 3, showing preparation conditions, relative luminance, and lifespan for Comparative Examples 6 to 11.

### DETAILED DESCRIPTION

Embodiments will now be described more fully hereinafter with reference to the accompanying drawings; however, the invention may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an n^{th} member, where n is greater than 3, whereas the expression "at least one selected from the group consisting of A, B, and C" does not.

As used herein, the expression "or" is not an "exclusive or" unless it is used in conjunction with the term "either." For example, the expression "A, B, or C" includes A alone; B alone; C alone; both A and B together; both A and C together; both B and C together; and all three of A, B, and C together, whereas the expression "either A, B, or C" means one of A alone, B alone, and C alone, and does not mean any of both A and B together; both A and C together; both B and C together; and all three of A, B, and C together.

As used herein, the terms "a" and "an" are open terms that may be used in conjunction with singular items or with plural items. For example, the term "a solvent" may represent a single compound, e.g., butylcarbitolacetate, or multiple compounds in combination, e.g., butylcarbitolacetate mixed with terpineol.

Embodiments of the invention relate to a green phosphor for a display device. The display device may include a PDP. The green phosphor may include, e.g., a Zn₂SiO₄:Mn phosphor coated with a coating material, e.g., B₂O₃. The coating material may be present in an amount of about 0.001 wt.% to about 3 wt.%, based on the total weight of Zn₂SiO₄:Mn. Preferably, the coating material is present in an amount of about 0.05 wt.% to about 2 wt.%. More preferably, the coating material is present in an amount of about 0.1 wt.% to about 1 wt.%.

Maintaining the amount of the coating material at about 0.001 wt.% to about 3 wt.%, based on the total weight of Zn₂SiO₄:Mn may help improve the luminance and lifespan of a green phosphor layer formed therefrom. In addition, when the amount of the coating material is about 0.1 wt.% to about 1 wt.%, based on the total weight of Zn₂SiO₄:Mn, the green phosphor may form a green phosphor layer exhibiting remarkably improved luminance.

The green phosphor may be prepared by, e.g., dissolving the coating material in a solvent, e.g., dissolving B₂O₃ in water to form a coating material solution, adding Zn₂SiO₄:Mn to the coating material solution, and drying the resulting mixture to coat the coating material on the surface of the Zn₂SiO₄:Mn phosphor. In a specific example, the green phosphor may be Zn₂SiO₄:Mn with a predetermined about of B₂O₃ coated thereon. The solvent for dissolving the coating material may include, e.g., water.

Then, the resulting material may be heat-treated at about 400 °C to about 500°C. Maintaining the temperature during the heat treatment at about 400 °C to about 500 °C may help ensure that a phosphor layer formed therefrom exhibits greatly improved luminance. The heat treatment may be performed for up to about 1 hour. Maintaining the length of heat treatment at up to about 1 hour may help ensure improved luminance.

After heat-treating, the coating material may be present in an amount of about 0.001 wt.% to about 3 wt.% based on the total weight of Zn₂SiO₄:Mn. Preferably, the coating material is present in an amount of about 0.05 wt.% to about 2 wt.%. More preferably, the coating material is present in an amount of about 0.05 wt.% to about 1 wt.%. Maintaining the amount of coating material at about 0.001 wt.% to about 3 wt.% based on the total weight of Zn₂SiO₄:Mn, may help ensure that a phosphor layer formed therefrom has greatly improved luminance.

The coating material may be coated at a thickness of about 10 nm to about 100 nm. Maintaining the thickness of the coating material at about 10 nm to about 100 nm may help ensure that a green phosphor layer formed therefrom has greatly improved luminance and lifespan.

A display device according to an embodiment of the invention may include a PDP including a first substrate and a second substrate facing each other; a plurality of address electrodes disposed on the first substrate; a plurality of display electrodes disposed on a side of the second substrate in a direction crossing the address electrodes; and red, green, and blue phosphor layers disposed in a discharge space between the first substrate and the second substrate. The green phosphor layer may include the above described green phosphor with the coating material.

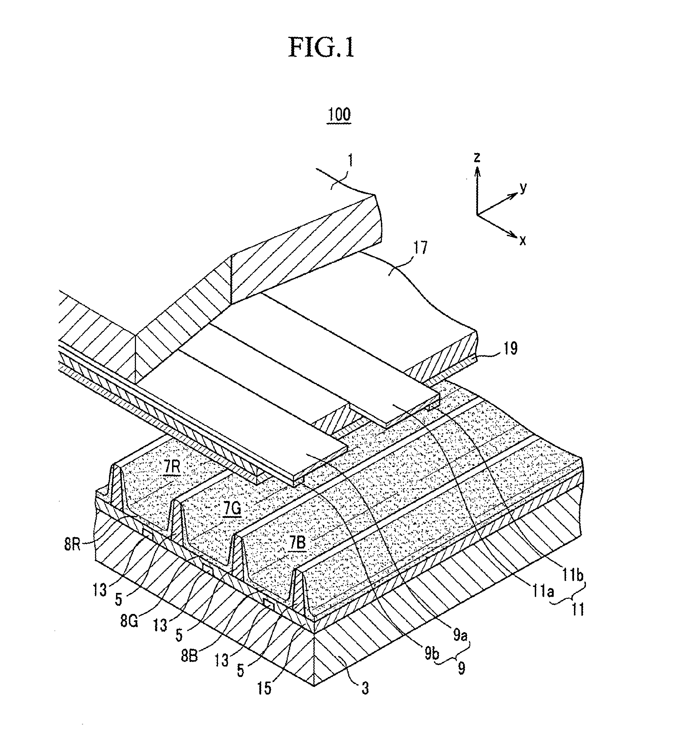

FIG. 1 illustrates a partially-exploded perspective view showing the structure of a PDP 100 according to an embodiment of the invention. Referring to FIG. 1, the PDP includes a first substrate 3, a plurality of address electrodes 13 disposed in a first direction (a Y direction in the drawing) on the first substrate 3, and a dielectric layer 15 disposed on the surface of the first substrate 3 covering the address electrodes 13. Barrier ribs 5 are formed on the dielectric layer 15, and red (R), green (G), and blue (B) phosphor layers 8R, 8G, and 8B are disposed in discharge cells 7R, 7G, and 7B formed between the barrier ribs 5.

The green phosphor layer 8G includes a green phosphor including Zn₂SiO₄:Mn and a coating material including B₂O₃. The coating material may be present in an amount of about 0.001 wt.% to about 3 wt.%, based on the total weight of Zn₂SiO₄:Mn. Preferably, the coating material is present in an amount of about 0.05 wt.% to about 2 wt.%. More preferably, the coating material is present in an amount of about 0.1 to about 1 wt.%. Preparing the green phosphor layer may include heat-treating a phosphor, e.g., Zn₂SiO₄:Mn, coated with a coating material, e.g., B₂O₃, at about 400 °C to about 500 °C.

in alternative embodiments, the barrier ribs 5 may be formed in any suitable shape to partition the discharge space. In addition, the barrier ribs 5 may have diverse patterns. For example, the barrier ribs 5 may be formed as an open type, e.g., stripes, or as a closed type, e.g., a waffle, a matrix, or a delta shape. Also, the closed-type barrier ribs may be formed such that a horizontal cross-section of the discharge space is a polygon, e.g., a quadrangle, a triangle, or a pentagon, or a circle or an oval.

Display electrodes, each including a transparent electrode 9a and 11a and a bus electrode 9b and 11b, are disposed in a direction crossing the address electrodes 13 (an X direction in the drawing) on a surface of a second substrate 1 facing the first substrate 3. Also, a second dielectric layer 17 and a protective layer 19 are disposed on the surface of the second substrate 1 while covering the display electrodes. Discharge cells are formed at positions where the address electrodes 13 of the first substrate 3 cross the display electrodes of the second substrate 1.

In the PDP, address discharge is achieved by applying an address voltage (Va) between the address electrodes 13 and the display electrodes. When a sustain voltage (Vs) is applied between a pair of display electrodes, an excitation source generated from the sustain discharge excites a corresponding phosphor layer to thereby emit visible light through the second substrate 1, and display an image. The phosphor layers are excited by vacuum ultraviolet (VUV) rays.

The following examples illustrate embodiments of the invention in more detail. However, it should be understood that the invention is not limited by these examples.

### Fabrication of a PDP

### Examples 1 to 8

B₂O₃ was measured, respectively, in an amount calculated to be 0.001, 0.05, 0.1, 0.5, 0.7, 1, 2, and 3 wt.%, based on a total weight of Zn₂SiO₄:Mn, and dissolved in pure water to form a solution. Then, the green phosphor of Zn₂SiO₄:Mn was added thereto. The B₂O₃ solution and the phosphor were mixed in a weight ratio of 5:1. The mixed liquid was agitated for 30 minutes and dried to coat B₂O₃ on the surface of the phosphor, thereby preparing a green phosphor powder including Zn₂SiO₄:Mn with B₂O₃ coated on its surface. The coating thickness was about 10 nm to about 100 nm.

40 parts by weight of the green phosphor powder was mixed with a mixture prepared by adding 6 parts by weight of an ethylcellulose binder to 100 parts by weight of a mixed solvent including butylcarbitolacetate and terpineol in a weight ratio of 3:7, to prepare a green phosphor paste.

The green phosphor paste was coated inside discharge cells of a first substrate having barrier ribs. The coated substrate was dried, and then fired to form a green phosphor layer on the substrate.

In addition, red and blue phosphor layers were formed by respectively coating (Y,Gd)BO₃:Eu and CaMgSi₂O₆:Eu phosphor materials in red and blue discharge cells in the same method described above.

The first substrate having the red, green, and blue phosphor layers was assembled with a second substrate including a display electrode and the like. The resulting product was exhausted, implanted, and aged to fabricate a PDP.

### Comparative Example 1

A PDP was fabricated according to the same method as Example 1 except the green phosphor layer was prepared using Zn₂SiO₄:Mn with no B₂O₃ coating.

### Reference Example 1

A PDP was fabricated according to the same method as Example 1 except that a green phosphor powder including 4 wt.% of B₂O₃ coated on the surface of Zn₂SiO₄:Mn, based on the total weight of the green phosphor, was used.

### Examples 9 to 16

A PDP was fabricated according to the same method as Examples 1 to 8 except that the dried resulting material of Examples 1 to 8 was heat-treated at 450 °C for 10 minutes.

### Comparative Example 2

A PDP was fabricated according to the same method as Comparative Example 1 except that the Zn₂SiO₄:Mn was heat-treated at 450 °C for 10 minutes.

### Reference Example 2

A PDP was fabricated according to the same method as Reference Example 1 except that the dried resulting material was heat-treated at 450 °C for 10 minutes.

### Comparative Example 3

A PDP was fabricated according to the same method as Comparative Example 1 except that a commercially-available green phosphor, NP-200-203 (Nichia Ltd.) was used.

### Luminance and life-span characteristics of the green phosphor layers

The PDPs prepared according to Examples 1 to 16, Comparative Examples 1 to 3, and Reference Examples 1 and 2 were set to light only green phosphor layers. The green lights from the PDPs were measured regarding luminance and CIE color coordinates (x, y) using a contact brightness meter (CA-100). Furthermore, the lifespan characteristics of the phosphor layers were evaluated by measuring the luminance maintenance rates after 1000 hours. Herein, lifespan characteristics were examined based on a reference luminance measured at a zero hour.

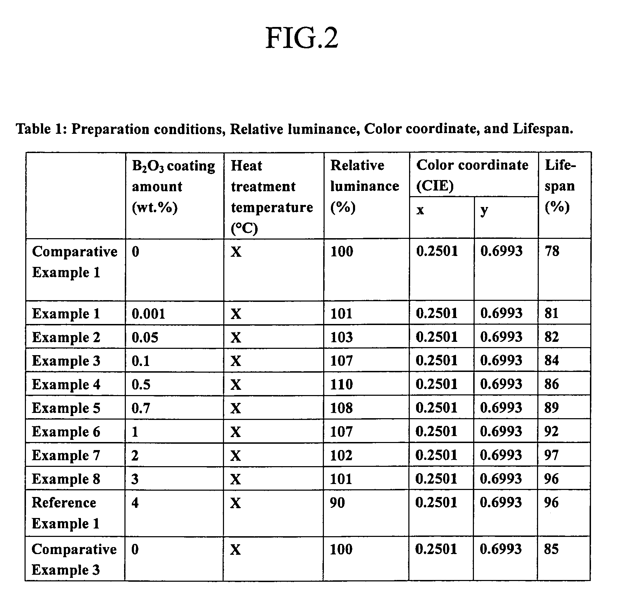

The results of Examples 1 to 8, Comparative Examples 1, and 3, and Reference Example 1 are shown in Table 1 of FIG. 2. The relative luminance in Table 1 was calculated using the initial luminance of Comparative Example 3 as a reference.

Referring to Table 1, the phosphor layers prepared according to Examples 1 to 8 exhibited better luminance and longer lifespans than the phosphor layers prepared according to Comparative Examples 1 and 3, and Reference Example 1. Furthermore, the phosphor layers prepared according to Examples 3 to 6 exhibited excellent luminance and lifespan characteristics.

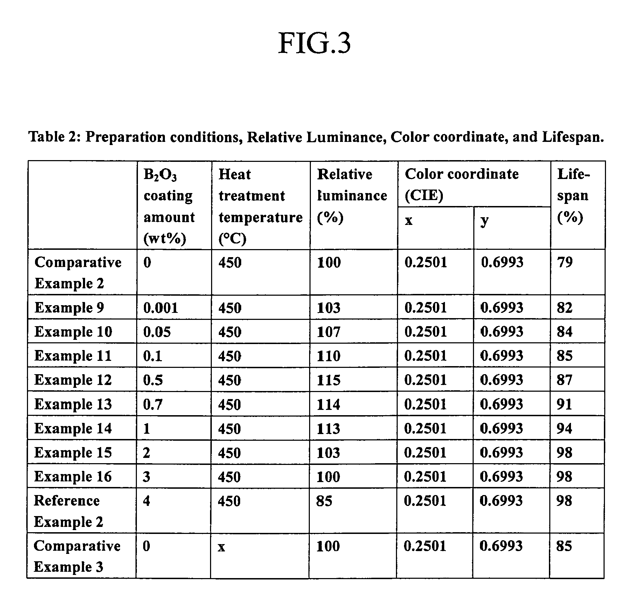

The measurement results of Examples 9 to 16 and Comparative Examples 2 and 3, and Reference Example 2, are shown in Table 2 of FIG. 3. The relative luminance in Table 2 was calculated using the initial luminance of Comparative Example 3 as a reference.

Referring to Table 2, the phosphor layers prepared according to Examples 9 to 16 exhibited better luminance and longer lifespan than Comparative Examples 2 and 3, and Reference Example 2. Furthermore, the phosphor layers prepared according to Examples 10 to 14 exhibited excellent luminance and lifespan characteristics.

Measurement of luminance and lifespan improvement depending on change of phosphor materials

### Comparative Examples 4 to 9

B₂O₃ was coated on each phosphor material: BaMgAl₁₀O₁₇:Eu, CaMgSi₂O₆:Eu, YBO₃:Tb, BaMgAl₁₀O₁₇:Mn, YBO₃:Eu, and Y(P,V)O₄:Eu, according to the same method as Example 1, thereby obtaining phosphors.

The phosphors of Comparative Examples 4 to 9 were measured regarding luminance, color coordinates, and lifespan characteristics. Lifespan was calculated as a luminance maintenance rate after radiating with VUV rays for one hour based on a baseline 0 hour radiation.

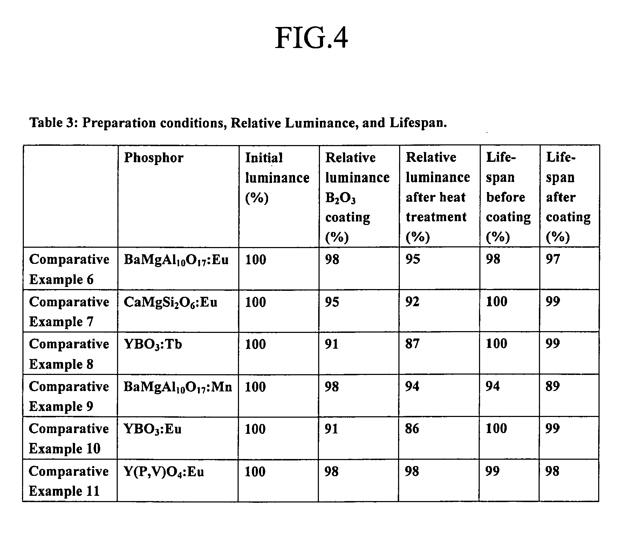

In addition, the luminance was measured for the phosphors of Comparative Examples 4 to 9 after heat-treating the phosphors at 450 °C for 10 minutes. The measurement results are shown in Table 3 of FIG. 4. In Table 3, the relative luminance after coating B₂O₃ was calculated based on initial luminance of each phosphor material before coating.

Referring to Table 3, the other phosphors for a PDP did not exhibit improved luminance and lifespan characteristics when they included a B₂O₃ coating, unlike Zn₂SiO₄:Mn.

Illustrative embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A green phosphor for a display device, comprising:
Zn₂SiO₄:Mn coated with a B₂O₃ coating material, wherein the B₂O₃ coating material is present in an amount of from 0.001 wt.% to 3 wt.%, based on the total weight of Zn₂SiO₄:Mn.

2. A green phosphor as claimed in claim 1, wherein the B₂O₃ coating material is present in an amount of from 0.05 wt. % to 2 wt.%, based on the total weight of Zn₂SiO₄:Mn.

3. A green phosphor as claimed in claim 2, wherein the B₂O₃ coating material is present in an amount of from 0.1 wt.% to 1 wt.%, based on the total weight of Zn₂SiO₄:Mn.

4. A green phosphor as claimed in any preceding claim, wherein the B₂O₃ coating material is coated at a thickness of from 10 nm to 100 nm.

5. A display device, comprising:
a first substrate and a second substrate facing each other;
a plurality of address electrodes disposed on the first substrate;
a plurality of display electrodes disposed on the second substrate in a direction crossing the address electrodes; and
red, green, and blue phosphor layers disposed in a discharge space between the first substrate and the second substrate,
wherein the green phosphor layers include a green phosphor according to one of Claims 1 to 4.

6. A method of fabricating a display device, comprising:
providing a first substrate and a second substrate facing each other and having a discharge space therebetween;
forming a plurality of address electrodes on the first substrate;
forming a plurality of display electrodes the second substrate in a direction crossing the address electrodes; and
forming red, green, and blue phosphor layers in the discharge space between the first substrate and the second substrate,
wherein the green phosphor layers include a green phosphor according to one of Claims 1 to 4.

7. A method as claimed in claim 6, wherein forming the green phosphor layers includes mixing Zn₂SiO₄:Mn with B₂O₃ to form a mixture, and heat treating the mixture at about 400 °C to about 500 °C.

8. A method as claimed in claim 7, wherein heat treating the mixture is performed for a non-zero amount of time of up to 1 hour.
